# EUROPEAN PATENT APPLICATION

(11) **EP 3 730 775 A1**
(43) Date of publication of application: **28.10.2020**
(21) Application number: 20170962.3
(22) Date of filing: 23.04.2020
(51) Int. Cl.: F02M 65/00, G01N 27/00

(54) **METHOD FOR DETECTION OF MECHANICAL STRESS IN A COMMON RAIL BODY**

(30) Priority: 24.04.2019 GB 201905683
(71) Applicant: Delphi Technologies IP Limited, Saint Michael (BB)
(72) Inventor: KAZANCI, Ernur, Gillingham, Kent ME7 3QT (GB); IYIUYARLAR, Bora, Izmir (TR); PIHAVA, Ernur Güsav, 35030 IZMIR (TR)
(74) Representative: Delphi France SAS

(57) **Abstract**

The invention concerns a method for detection of residual stress in a common rail body (20) made from magnetizable material. The method comprises repeating the following detection process for a plurality of points along the length of the common rail body (20): disposing a sensor (5) of a sensor device (2) adjacent the wall (21) of the common rail body; generating a magnetizing field with the sensor (5), which magnetizing field extends at least into a detection volume (25) of the wall (21); in response to said magnetizing field, detecting a Barkhausen noise with the sensor (5) and determining a Barkhausen noise level; and comparing the determined Barkhausen noise level with a reference value to estimate the residual stress condition at the measurement point.

## Description

### TECHNICAL FIELD

The invention relates to a method for detection of mechanical stress in a common rail body.

### BACKGROUND ART

Modern diesel engines are often equipped with a common-rail direct fuel injection system. A central component of such a system is the common rail body, which is made of forged steel and comprises an elongate inner bore that is connected to lateral outlet openings for feeding fuel injectors arranged to inject fuel in the individual cylinders of the engine. An important aspect of common rail technology is an extremely high fuel pressure inside the common rail, e.g. between 1000 and 2500 bar. As the fuel is released into the individual cylinders, this high pressure leads to the formation of a high number of small droplets, which increases the efficiency of the combustion. However, withstanding these high fuel pressures for several 10,000 operating hours requires the common rail body to have extraordinary mechanical properties.

It has been found that residual stresses and strains are one of most important factors which positively affect fatigue life of the common rail body. Stresses and strains can be obtained by subjecting the common rail body to an autofrettage (AF) process. The principle of autofrettage is to fill the inside of the common rail body with a liquid and, by pressurizing the liquid, to subject the inside of the rail body to a pressure so that the elastic limit of the metal is exceeded. When the pressure is released, residual stresses remain within the wall of the common rail body, as long as the plastic deformation is limited to an inner region of the wall. These residual stresses increase the pressure capacity of the rail body. The exact geometry of the pressurized body and applied pressure limit are the key factors to obtain the desired amount of residual stress and plastic strain. In particular, the pressure limit should be defined very carefully, because otherwise plasticity may spread through the entire body including the outer region of the wall, which may cause early fatigue failures.

However, finding the appropriate pressure limit or testing the result of autofrettage process is rather difficult. Today, finite element analysis (FEA) and residual stress measurements (X-ray diffraction, hole drilling and vice versa) are common methods to define the optimum autofrettage pressure limits. FEA studies may be difficult, though, because of program settings such as material models and boundary conditions. Therefore, supportive measurement methods should be carried out. Destructive test methods may be used to measure the residual stresses induced by AF inside the fuel rail. In order to carry out these destructive measurement techniques, it is necessary to cut the common rail body in half (e.g. by electrical discharge machining; EDM) along its axial direction. This cutting process creates an extra stress zone, which leads to more tension residual stresses and less compressive residual stresses. EDM cutting may even eliminate all compressive stresses which were created by the AF process. Therefore, the results of the destructive measurement cannot correlate properly with the FEA results.

### TECHNICAL PROBLEM

It is thus an object of the present invention to provide a simple and reliable method to detect mechanical stress in a common rail body.

This problem is solved by a method according to claim 1.

### GENERAL DESCRIPTION OF THE INVENTION

The invention provides a method for detection of mechanical stress in a common rail body. The method is mostly applied to a common rail body that has been previously subjected to an autofrettage process. The goal of the method is to test whether a desired amount and/or distribution of mechanical stress in the common rail body has been achieved by the autofrettage. In assembled state, the common rail body is part of a fuel supply and distribution system of a diesel engine. During operation, highly pressurized diesel fuel is temporarily stored in the common rail body and from there distributed to the valves of the individual cylinders. The body has a wall surrounding an axially extending central bore. It is understood that the body is made of metal, in particular ferromagnetic steel. While reference is made to the central bore, which is normally straight and defines an axial direction, this central bore is normally connected to a plurality of ducts branching off from the central bore, which are adapted to supply fuel to the fuel injectors of the individual cylinders.

The method comprises performing at least one detection process. In one step of the detection process, a sensor of a sensor device is disposed adjacent the wall. In general, the sensor device may comprise, apart from the sensor, other components e.g. for supplying the sensor with power, sending and/or receiving signals from the sensor, processing signals received from the sensor or the like. The sensor is disposed adjacent the wall which includes the possibility that it is disposed in a position near but spaced-apart from the wall. Normally, the sensor is disposed in contact with the wall.

In another step of the detection process, a magnetizing field is generated with the sensor, which magnetic field extends at least into a detection volume of the wall leading to a magnetization of said wall. The detection volume, which could also be referred to as a detection space or a detection region is a part of the wall, more specifically a part of the wall for which the mechanical stress is to be determined by this detection process. The detection volume is usually a volume near the sensor. In general, the magnetic field is time-dependent, which includes the possibility that the amplitude of the magnetic field may increase and/or decrease as well as that the direction of the magnetic field could change. Any changes may be continuous or discontinuous.

In another step of the detection process, which may be performed after and/or simultaneously with the previously mentioned step, and in response to the magnetic field, a Barkhausen noise is detected with the sensor. It is understood that presence of the magnetic field in the detection volume generally leads to a magnetization. This magnetization can be detected by its influence on the total magnetic field. Since the magnetic field is time-dependent, the magnetization of the detection volume is generally also time-dependent (which may thus be detected), although it may remain constant for certain time intervals. Based on the detected Barkhausen noise, a Barkhausen noise level is determined.

Based on the sensed Barkhausen noise signal, a Barkhausen noise level is determined, which is a quantity indicative of mechanical stress in the detection volume. Since the wall and therefore the material inside the detection volume is ferromagnetic, magnetic domains having individual local magnetization are present in the detection volume. Without willing to be bound by theory, some principles are explained below. In the absence of any exterior magnetic field, the magnetic domains are randomly oriented, which makes the total net magnetization of the material zero. As the material is subjected to the magnetizing field, the magnetic domains tend to align themselves in the direction of the magnetizing field. If, for example, the applied magnetic field is reduced again, the magnetic domains try to go back to their random alignment. However, pinning sites, which are precipitates, grain boundaries, inclusions, dislocations and small volumes of second phase material, slow down the domain wall's movement. During domain wall movement, domain wall energy is spent to overcome the pinning sites. The abrupt jumps due to energy spending lead to sudden changes in the magnetization of the material, even if the applied magnetic field changes continuously, and these so-called Barkhausen jumps give rise to a discontinuity that is directly observable (e.g. in a hysteresis loop). The changes in the magnetization appear abruptly and at random, wherefore they are referred to as Barkhausen noise. Historically, the term referred to the sound that can be heard in a loudspeaker when it is coupled to an induction coil that is subjected to the magnetic field influenced by the changing magnetization. However, in the present context of the invention, the term "Barkhausen noise" refers to the random, abrupt changes of the magnetization. Different characteristics of the Barkhausen noise depend on the mechanical stress present in the material. Therefore, the mechanical stress can be assessed by one or several quantities acquired based on the Barkhausen noise. Also to be noted, in the context of the invention, the term "mechanical stress" is to be understood as encompassing stress and/or strain, and in the specific application of the invention also includes residual stress.

The inventive method can also be classified as a magnetoelastic method. According to the invention, the mechanical stress (and particularly residual stress) in the wall of the common rail body can be determined in a non-destructive way and possibly with high accuracy and high spatial resolution. Also, the method is simple and works quickly. Generating the magnetic field and detecting the magnetization only requires relatively simple and low-cost components. With the inventive method, it is possible to determine the effect of an autofrettage process on the common rail body. This can allow for an estimation of fatigue strength and fatigue life.

There are several possibilities as to the at least one quantity or Barkhausen noise level. For example, the magnetic field could be increased gradually from a minimum value (e.g. zero) to a maximum value. At some value in between, the Barkhausen noise would start and this value normally depends on the mechanical/residual stress in the respective detection volume. Therefore, the intensity of the magnetic field at the start of the Barkhausen noise could be the quantity that indicates the mechanical stress. In this context, Barkhausen noise level, normally measured in magnetoelastic parameter units (MPU) refers to the amount of Barkhausen noise within a certain frequency range. The frequency range may be defined by a frequency filter that is applied to the detected magnetization.

The method involves performing a plurality of detection processes. In each of the detection processes, a magnetic field is generated, a magnetization is detected and at least one quantity indicating a mechanical stress is acquired based on the Barkhausen noise of the magnetization. In other words, each detection process yields one value of Barkhausen noise, corresponding to one value for the mechanical/residual stress.

On the one hand, it is possible to perform a plurality of detection processes with the sensor in one and the same position, e.g. in order to reduce a statistical error or to verify a result. Alternatively or additionally, it is preferred that a position of the sensor is changed between two detection processes. In other words, two consecutive detection processes are performed with the sensor being in different positions. This may in particular refer to different axial positions and/or different tangential positions. The sensor may be moved manually from one position to another or it may be moved automatically by at least one actuator that is part of a measurement system. A control unit of the measurement system may control the at least one actuator to move the sensor along a predefined sequence of positions, performing at least one detection process in each of the positions.

It would be possible to determine the reference values based on theoretical calculations, which would normally be done numerically. It may be more reliable, though, to determine the reference values experimentally. According to preferred embodiment, each reference value is determined using a calibration sample, which is made of the same material and has the same geometry as the common rail body and has a known stress distribution. In other words, the calibration sample is in fact also a common rail body, since it is made of the same material and has the same geometry. However, the mechanical stress in the calibration sample is known, normally because it has been measured by a different method. Then, a "calibration detection" can be performed essentially in the same way as the detection process on the common rail body. In other words, the Barkhausen noise level is determined for the calibration sample and, since it can be related to a known mechanical stress, it can be used as a reference value. Different calibration samples having different distributions of mechanical stress can be used to determine different reference values.

While it is conceivable to apply the magnetic field and detect the magnetization from an outer side of the common rail body, it is highly preferred that the sensor is at least partially inserted into the bore and is disposed adjacent to an inner surface of the wall. This can be advantageous for several reasons. On the one hand, it is easy to place the sensor in any desired axial position by moving it inside the bore, since the bore is (normally) straight and the wall has a more or less smooth inner surface. Furthermore, if stress detection needs to be focused on a region near the inner surface, this can be achieved more accurately by disposing the sensor near this inner surface. Usually, the sensor is inserted entirely into the bore for at least some detection processes. The present method is particularly useful for measuring the stress condition inside the longitudinal bore of the common rail body after auto-frettage.

Usually, the central bore is relatively long and thin, which normally necessitates a special adaption of the sensor device to allow for accurate positioning of the sensor. According to a preferred embodiment, the sensor is mounted to an elongate handling element of the sensor device and that during at least one detection process, the handling element is at least partially inserted into the bore. The sensor may be fixedly mounted to the handling element or it may e.g. be mounted elastically. The handling element may in particular be a rod or shaft. It can be rigid or it may be elastic. Normally, given that the central bore is straight, a rigid handling element may be used. However to compensate for deviations from the gundrill axis, the rigid shaft portion may terminate by a flexible section, on which the sensor is fixed. The handling element can be operated from outside the bore either manually or automatically by at least one actuator. It is understood that the handling element can be used to adjust an axial position of the sensor by inserting or withdrawing the handling element from the bore as well as to adjust a tangential position of the sensor by rotating the handling element. In particular, the length of the handling element may be selected so that it corresponds at least to a length of the bore. Thus, any axial position within the bore can be reached by the sensor from one side of the bore.

In order to provide reliable, reproducible detection results, it is advantageous to provide a constant distance of the sensor from the wall. In particular, this distance may be zero, i.e. the sensor may be in contact with the wall. It is therefore preferred that at least during each detection process, a preload of at least one spring element of the sensor device acts on the sensor and keeps it in contact with the wall. The spring element may act directly or indirectly on the sensor. For example, the spring element may be interposed between the handling element and the sensor itself or between the handling element and a pressure element disposed on an opposite side of the handling element with respect to the sensor. It is understood that the spring element gives rise to a radial force acting on the sensor. By this radial force, the sensor is preloaded so that it is kept in contact with the wall. Normally, the sensor is also kept in contact with the wall between two detection processes. By employing the at least one spring element, appropriate positioning of the sensor is greatly facilitated, since it is automatically kept in the appropriate radial position. Therefore, only the axial position and/or the tangential position need to be adjusted. This is particularly useful if a long and relatively thin handling element is used to position the sensor.

In general, neither the method for generating the magnetic field nor the method for detecting the magnetization is limited within the invention. Normally, the magnetic field is generated by a coil (although it could be done by means of a magnet). Also, the magnetization may be detected by a coil. The magnetization of course gives rise to a magnetic field component that influences a voltage induced in the coil. In particular, the magnetic field can be generated by a coil that is also used to detect the magnetization. It is understood that alternatively, two separate coils could be used for generating the magnetic field and for detecting the magnetization, respectively.

Basically, the Barkhausen noise could be determined by applying a magnetic field corresponding to a single ramp, i.e. a magnetic field that starts from a minimum value and is increased to a maximum value. It is preferred, though, that the magnetic field is alternatingly changed during one detection process. In other words, the magnetic field is alternatingly increased and decreased. In particular, the magnetic field may be changed periodically, corresponding to a basic magnetizing frequency and possibly upper harmonics. As the magnetic field is changed alternatingly, its direction may also change, i.e. the magnetic field may be reversed.

Based on the Barkhausen noise and the at least one quantity, the mechanical stress may be determined by a human being. According to another embodiment, the method comprises automatically determining the mechanical stress in the detection volume based on the magnetization. Any calculations and/or comparisons necessary for determining the mechanical stress can be performed by a processing unit that evaluates the detected magnetization. This is particularly useful if the sensor is moved automatically between two detection processes. The sensor could be moved automatically by a measurement system that performs a predefined measurement protocol and that automatically determines the mechanical stress for each detection process.

While it is possible to detect the magnetization and thereby assess the stress in different axial and/or tangential positions along the inner surface of the wall by moving the sensor, it is also possible to detect the stress at different depths within the wall, corresponding to different radial positions. According to one embodiment, at least one operation parameter of the sensor is adjusted to detect the magnetization at a detection depth inside the wall with respect to the sensor. While reference is made to "a" detection depth, it should be understood that it is not possible to select a specific depth with arbitrary accuracy. Therefore, the detection depth always represents a depth range, which however may be small, e.g. only several 10 µm or several µm. In this context, the detection depth may be understood as the centre of this depth range. Normally, the at least one operation parameter is changed between two detection processes. I.e. the operation parameter is unchanged during one detection process and is changed for the next detection process. In particular, the position of the sensor may remain constant between two detection processes where at least one operation parameter is changed.

In particular, the at least one operation parameter can be selected from a magnetizing frequency of the magnetic field, an amplitude of the magnetic field and a filter range of a filter applied to detect the magnetization. The magnetizing frequency in this context is the (basic) frequency with which the magnetic field changes over time. Optionally, the magnetic field may contain one basic frequency and at least one upper harmonic (i.e. a multiple of the basic frequency). The amplitude of the magnetic field can be adapted by changing a voltage or a current, respectively, that is applied to the above-mentioned coil. The filter range may be adapted by changing a minimum frequency and a maximum frequency. Attentively, it may be adapted by changing a centre frequency and optionally a bandwidth. In particular, the magnetizing frequency and the filter range may be adapted correspondingly, e.g. so that the magnetizing frequency is within the filter range. However, the magnetizing frequency may be above or below the filter range. Also, it is possible to apply different filter ranges to detect the magnetization at different depths while maintaining the magnetizing frequency constant.

In particular, it is possible that the magnetization frequency is decreased as a function of the detection depth. In other words, a higher magnetization frequency is selected for a smaller detection depth and a lower magnetization frequency is selected for a larger detection depth. Alternatively or additionally, it is possible that a centre frequency of the filter range is decreased as a function of the detection depth. In other words, a higher centre frequency is selected for a smaller detection depth and a lower centre frequency is selected for a larger detection depth. Normally, the centre frequency is the arithmetic mean of the minimum frequency and the maximum frequency of the filter range. If the centre frequency is decreased, at least one of the minimum frequency and the maximum frequency of the filter range (normally both) is decreased.

It would be possible to determine the mechanical stress e.g. by some kind of calculation based on the at least one quantity, normally the Barkhausen noise level. Such calculation could be based on theoretical assumptions. It is preferred, though, that the mechanical stress is determined by comparing the determined Barkhausen noise level with at least one reference value of Barkhausen noise level. In other words, the at least one reference value indicates a certain amount of mechanical/residual stress and by comparing the quantity with the reference value, the mechanical stress/residual can be determined at least approximately. In particular, a plurality of reference values, each corresponding to a certain mechanical/residual stress, may be used to determine the mechanical stress/residual of the detection volume. These reference values could e.g. be stored in a lookup table. By comparing the at least one quantity to the reference values, the mechanical stress can be determined. If necessary, suitable methods like linear interpolation between two reference values can be used to approximately determine the mechanical/residual stress.

### BRIEF DESCRIPTION OF THE DRAWINGS

Preferred embodiments of the invention will now be described, by way of example, with reference to the accompanying drawings, in which:
Fig. 1 schematically shows a system for performing the inventive method;
Fig. 2 is a sectional detail view of a sensor device of the system from fig. 1;
Fig. 3 is a sectional view of a common rail body with the sensor device from

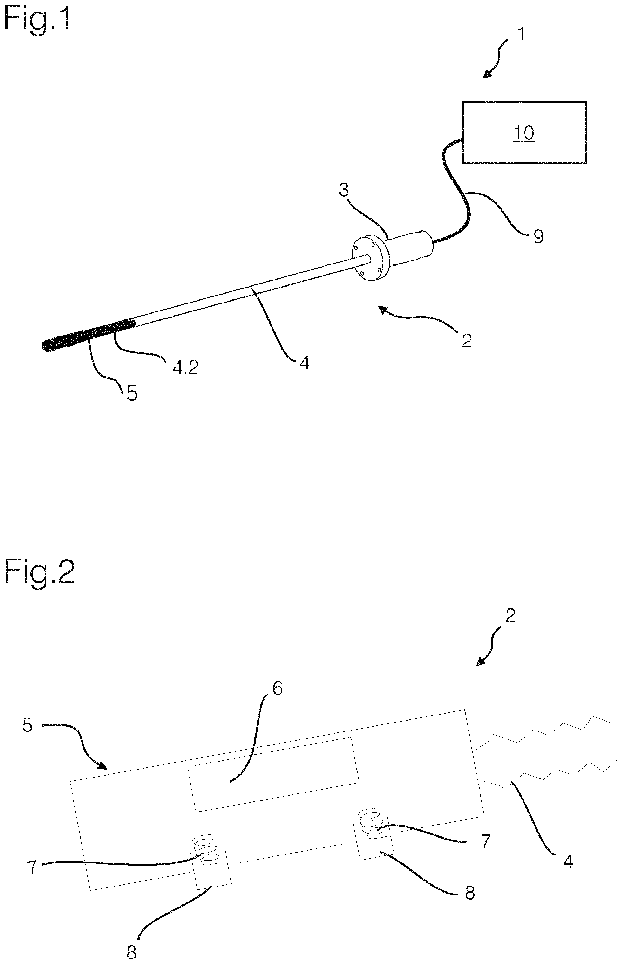

fig. 1 in a first position;

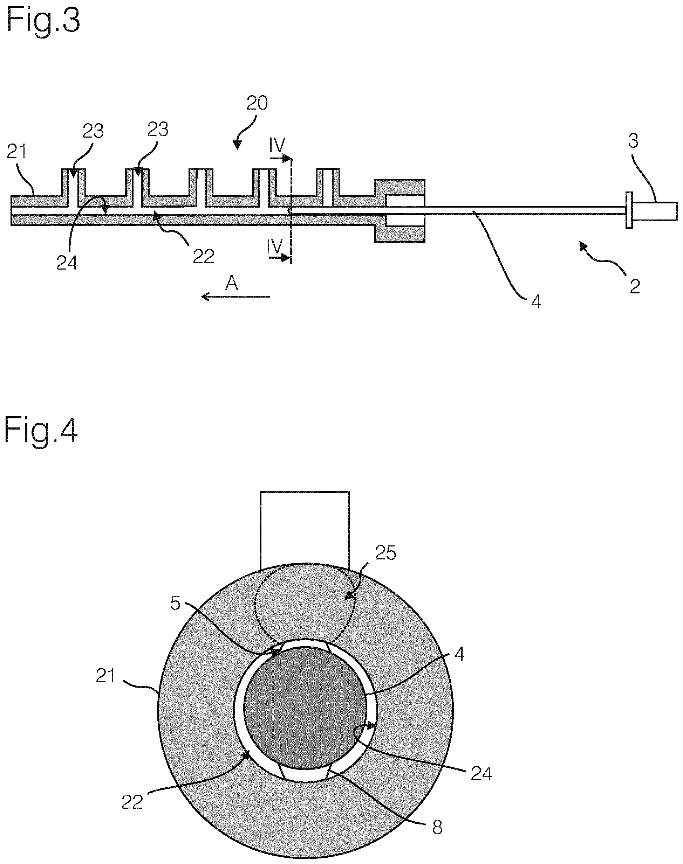

Fig. 4 is a sectional view along the line IV-IV in fig. 3;

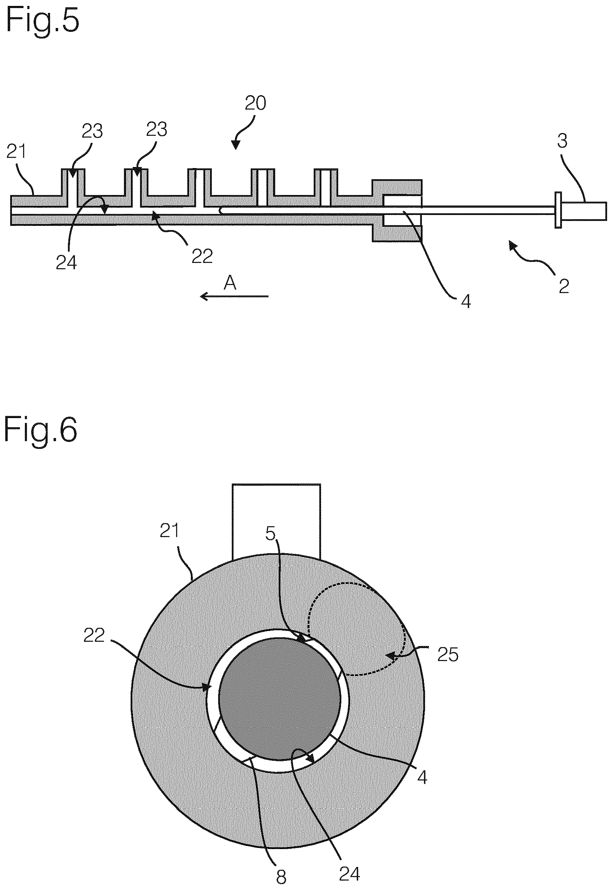

Fig. 5 is a sectional view corresponding to fig. 3 with the sensor device in a second position; and
Fig. 6 is a sectional view corresponding to fig. 4 with the sensor device in a third position.

### DESCRIPTION OF PREFERRED EMBODIMENTS

Fig. 1 shows a system 1 that can be used for implementing the inventive method. It comprises a sensor device 2 with a handle 3 that can be held by a user to manipulate the sensor device 2 and an elongate rod 4 connected to the handle 3. At an opposite end of the rod 4 with respect to the handle 3, the sensor device 2 comprises a sensor 5, which can be seen in the enlarged sectional view of fig. 2. Preferably, the sensor is fixed on a flexible end section of rod 4. For example, the elongate rod comprises a main, rigid rod section 4.1 and terminates with a flexible end section 4.2 that may be embodied as a helicoidal spring. In this embodiment, the sensor 5 is fixed in axial continuation of the rod 4, respectively of the flexible end section 4.2. The flexible end section 4.2 is advantageous in that it allows self-adapting of the sensor orientation inside the bore of the common rail, i.e. it can deviate from the axis of the rigid rod section 4.1.

The sensor 5 normally comprises a coil 6 that is connected to an electrical power source. The electrical power source could be disposed within the sensor device 2, but in this example it is disposed in a control unit 10 to which the sensor device 2 is connected by a cable 9. Through the cable 9, the control unit (which is only shown schematically in fig. 1) can apply an electrical current to the coil 6, whereby a magnetic or magnetizing field is generated. As can be seen in fig. 2, the sensor device 10 also comprises two pressure elements 8 disposed on an opposite side of the rod 4 with respect to the sensor 5. Each pressure element 8 is preloaded by a spring 7.

The control unit 10 may be a commercially available Barkhausen noise measurement apparatus (as commercialized, e.g., by the company STRESSTECH OY, Finland) or any other appropriate apparatus capable of measuring Barkhausen noise. Also, the coil 6 arrangement in the sensor may be a commercially available coil or a coil designed by those skilled in the art to sense Bakhausen noise in the context of the invention.

Figs. 3 and 4 are sectional views showing the sensor device to partially inserted into a common rail body 20. The common rail body 20, which is made of ferromagnetic metal, i.e. steel, comprises a wall 21 that surrounds a central bore 22. The bore 22 is straight and extends along an axial direction A. Furthermore, a plurality of ducts 23 branch off from the central bore 22, also referred to as fuel outlets or connecting pieces. In assembled state, these ducts 23 are connected, via high pressure pipes, to the fuel injectors of the individual cylinders of an engine (not shown). In order to increase the resistivity of the common rail body 20 to an internal pressure, it has been subjected to an autofrettage process. Ideally, such an autofrettage process, well known in the art, leads to a plastic deformation of an inner region of the wall 22, while an outer region is only deformed elastically. When the autofrettage process is completed, this should lead to residual stresses, in particular tangential compressive stresses in the inner region. Whether or not this has been achieved can be detected by the inventive method, which will now be described.

For a first detection process, the rod 4 with the sensor 5 is inserted into the bore 22 of the common rail body 20. The outer dimensions of the rod 4 are adapted to the inner dimensions of the bore 22 so that the pressure elements 8 need to be deflected against the force of the springs 7 in order to insert the rod 4. Thus, the springs 7 exert a preload that indirectly acts on the sensor 5 to keep it in contact with an inner surface 24 of the wall 21. When the sensor 5 has been placed in a first position at the inner surface 24 of the wall 21 (as shown in fig. 3 and 4), a time-dependent magnetic field is generated that penetrates the wall and is at least present in a detection volume 25 near the sensor. The limit of the detection volume 25 is indicated in fig. 3 and 4 by the dashed line. The shape and size of the detection volume 25 is to be understood only by way of example - this is a mere principle drawing. Also, it should be understood that the magnetic field normally extends beyond the detection volume 25.

The ferromagnetic material of the common rail body 20 comprises a multitude of domains, each of which has an individual magnetization. Without the presence of an external magnetic field, the individual magnetizations are randomly distributed so that the overall magnetization is zero. As the magnetizing field is applied by the sensor 5, the overall magnetization changes and the walls between the individual domains start to shift. Also, the magnetization of entire domains or even groups of domains can change abruptly. Therefore, the overall magnetization does not range continuously, but discontinuously. The corresponding jumps and the magnetization give rise to a Barkhausen noise, which is detected by the sensor 5 through its effect on the total magnetic field. The changes in the magnetic field caused by the Barkhausen noise give rise to an induced voltage in the coil 6 of the sensor 5 and therefore can be measured by the control unit 10.

There are various possibilities for the time-dependency of the magnetic field. One possibility is to apply a magnetic field with a strength that alternates in a sinusoidal manner. A magnetizing frequency of the magnetic field is controlled and can be adjusted by the control unit 10. Also, and amplitude of the magnetic field can be adjusted by the control unit 10. Furthermore, the detected Barkhausen noise in the magnetization is analyzed using a filter of the control unit 10, which filter has a filter range that can also be adjusted.

By way of example, the first detection process is performed with a magnetizing frequency of 150 Hz and a filter range of 10 to 70 kHz. With these parameters, the Barkhausen noise originating from a depth of about 70 µm inside the wall 21 can be analyzed. The control unit 10 determines a Barkhausen noise level (measured in magnetoelastic parameter units). This Barkhausen noise level depends on the mechanical stress in the material, and in particular on the level of residual stress due to autofrettage. By comparing the Barkhausen noise level to one or several reference values, the mechanical/residual stress can be determined at least approximately. These reference values have been obtained in advance by a corresponding detection performed on a calibration sample, which is a common rail body made of the same material and having the same geometry and for which the mechanical stress distribution has been determined by other methods (e.g. x-ray diffraction). The reference values can be stored in a lookup table of the control unit 10 so that the control unit 10 could automatically determine and output the mechanical stress. Alternatively, the mechanical stress could be determined mentally, i.e. by a user, based on the Barkhausen noise level determined by the control unit 10.

A second detection process could be performed without changing the position of the sensor 5 or the magnetizing frequency, but with a filter range of 70 to 200 kHz, in order to analyze the Barkhausen noise originating from a depth of about 24 µm inside the wall 21. Again, the resulting Barkhausen noise level can be compared to one or several reference values obtained from the calibration sample in order to determine the mechanical/residual stress in the respective depth. For a third detection process that is also performed without changing the position of the magnetizing frequency, a filter range between 200 and 450 kHz could be used, whereby the Barkhausen noise originating from a depth of 20 µm inside the wall could be analyzed. Optionally, other filter ranges can be used to selectively analyze the Barkhausen noise originating from other depths. Likewise, the magnetizing frequency and/or the amplitude of the magnetic field could be adjusted to specifically analyze different parts of the wall 21.

For another series of detection processes, the rod 4 is inserted further (deeper) into the bore 22, whereby the sensor device 2 with the sensor 5 is moved to a second position as shown in fig. 5. The length of the rod 4 is selected to be longer than the length of the bore 22 so that the sensor 5 can be positioned in any location inside the bore 22 by inserting the rod 4 from one end. By moving the sensor 5 to different positions along the axial direction, the residual stress can be determined as a function of the axial position.

To some extent it can be assumed that the residual stress does not depend on the tangential coordinate, i.e. that the residual stress is equally distributed around the circumference of the wall 21. However, this might not always be the case, especially in the vicinity of the ducts 23. Therefore, it may also be worthwhile to perform a plurality of detection processes for different tangential positions of the sensor. In other words, between two detection processes, the sensor device could be rotated about an axis corresponding to the axial direction. Fig. 6 by way of example shows the sensor device 2 in a third position that differs from the first position by a rotation.

It should be noted that as the sensor 5 is moved from one position to another, it is always kept in contact with the inner surface 24 of the wall 22 by the preload exerted by the springs 7. By in other words, appropriate positioning of the sensor 5 is greatly facilitated, since it is automatically kept in the appropriate radial position. Therefore only the axial position and/or the tangential position need to be adjusted. This is particularly useful since the rod 4 is relatively long and thin, wherefore it would be difficult to exactly determine the radial position of the sensor 5 only by manipulating the handle 3.

While fig. 1 shows a system 1 where the sensor device 2 has to be handled and positioned manually, it is understood that the handle 3 could be replaced by a portion where the rod 4 is connected to at least one actuator that moves the rod 4 from one position to another. The at least one actuator could then also be controlled by the control unit 10, so that the stress distribution within the comrades body could be determined fully automatically.

### Legend of Reference Numbers:

- 1: system
- 2: sensor unit
- 3: handle
- 4: rod
- 4.1: main rod section
- 4.2: flexible end section
- 5: sensor
- 6: coil
- 7: spring
- 8: pressure element
- 9: cable
- 10: control unit
- 20: common rail body
- 21: wall
- 22: bore
- 23: duct
- 24: inner surface
- 25: detection volume
- A: axial direction

## Claims

1. A method for detection of mechanical stress in a common rail body (20) made from magnetizable material, said common rail body (20) comprising a wall (21) surrounding an axially extending central bore (22), the method comprising repeating the following detection process for a plurality of points along the length of the common rail body (20):
- disposing a sensor (5) of a sensor device (2) adjacent the wall (21);
- generating a magnetizing field with the sensor (5), which magnetizing field extends at least into a detection volume (25) of the wall (21) leading to a magnetization of said wall (21);
- in response to said magnetizing field, detecting a Barkhausen noise with the sensor (5) and determining a Barkhausen noise level; and
comparing the determined Barkhausen noise level with a reference value to estimate the stress condition at the measurement point and, each reference value being determined by performing a calibration detection on a calibration sample, which is made of the same material and has the same geometry as the common rail body (2) and has a known stress distribution

2. The method according to claim 1, wherein the sensor (5) is inserted into the bore (22) and the detection processes are made at a plurality of positions adjacent to an inner surface (24) of the wall (21).

3. The method according to claim 1 or 2, wherein the sensor (5) is mounted to an elongate handling element (4) of the sensor device (2) and that during at least one detection process, the handling element (4) is at least partially inserted into the bore (22).

4. The method according to claim 3, wherein the elongate handling element (4) comprises a flexible end section (4.2), to which said sensor (5) is attached.

5. The method according to any of the preceding claims, wherein at least during each detection process, a preload of at least one spring element (7) of the sensor device (2) acts on the sensor (5) and keeps it in contact with the wall (21).

6. The method according to any of the preceding claims, wherein the magnetic field is generated by a coil (6) of said sensor (5) that is also used to detect the magnetization.

7. The method according to any of the preceding claims, wherein the magnetic field is alternatingly changed during one detection process.

8. The method according to any of the preceding claims, wherein it further comprises automatically determining the mechanical stress in the detection volume (25) based on the magnetization.

9. The method according to any of the preceding claims, wherein at least one operation parameter of the sensor (5) is adjusted to detect the magnetization at a detection depth inside the wall (21) with respect to the sensor (5).

10. The method according to claim 9, wherein the at least one operation parameter is selected from a magnetizing frequency of the magnetic field, an amplitude of the magnetic field and a filter range of a filter applied to detect the magnetization.
